# EUROPEAN PATENT SPECIFICATION

(11) **EP 2 056 326 B1**
(45) Date of publication and mention of the grant of the patent: **27.03.2013**
(21) Application number: 07425690.0
(22) Date of filing: 31.10.2007
(51) Int. Cl.: H01H 71/08, H01R 9/26

(54) **Modular electric circuit breaker**
Modularer Schutzschalter
Disjoncteur modulaire

(43) Date of publication of application: 06.05.2009
(73) Proprietor: Bticino S.p.A., 20154 Milano (IT)
(72) Inventor: Fabrizi, Fabrizio, 24122 Bergamo (IT)
(74) Representative: Carangelo, Pierluigi

(56) References cited:
- EP-A- 0 155 905
- DE-A1- 19 531 115
- JP-A- 2001 160 351
- JP-A- 2003 272 505
- JP-A- 2004 119 399

## Description

It is the object of the present invention an electric apparatus and, more particularly, a modular electric circuit breaker which is adapted to be removably installed on an electric apparatus-mounting rail of an electric board, comprising a main body and at least one electric connection terminal for the electromechanical connection of the circuit breaker to a comb busbar.

The present invention relates particularly to the field of modular electric circuit breakers which are intended to be installed on an electric apparatus-mounting rail, such as a DIN rail, for example, in an electric board or distribution and protection board of an electric installation.

As it is well known, both in civil and industrial environments, electric power supply installations depend on protection circuit breakers and boards of the above-mentioned type.

The boards, generally built-in, comprise a box-like housing, with relative lid, into which the circuit breakers are modularly installed, for example through snap-fit securing systems, on board of the electric apparatus-mounting rail.

These circuit breakers are often supplied in parallel, from the top or the bottom, through busbars, that is, conductive bars having a comb-like shape, which are electrically connected to a power supply line.

JP 2004 1193 99 discloses a modular electric circuit breaker including a selection terminal adapted to be moved for selectively connecting it to either of two conducting bars.

The teeth of the combs in the busbars are usually engaged inside screw clamps prearranged on the circuit breakers, by tightening the screws of which an electromechanical connection is established between the busbars and the circuit breakers.

Usually, the installation of the circuit breakers is performed relatively easily at first by coupling the individual circuit breakers to the apparatus-mounting rail so that they are brought in a mutual side-by-side relationship, subsequently inserting the busbars teeth inside the input clamps of the circuit breakers, and in the end screwing all the clamps of the circuit breakers.

In the prior art, wishing to replace an individual circuit breaker among those installed, for example due to failure, it is necessary to preliminarily provide for the unscrewing of the clamps of all the side-by-side circuit breakers, then to the movement of the busbar for the disengagement of the teeth from the clamps and, in the end, after acting on the members for the coupling of the circuit breaker to the rail, to the removal of the circuit breaker to be replaced (through a rotating and then a translating movement).

The replacement of a circuit breaker according to the prior art consequently requires a considerable time for the removal and reinstallation of the circuit breaker.

Furthermore, the reinstallation of the new circuit breaker determines an increase in the probability of committing connecting errors, due to the need to reconnect all the circuit breakers to the comb busbars by means of the screwing of the respective clamps.

It is the object of the present invention to carry out a modular electric circuit breaker which is able to solve the previously discussed drawbacks relative to the

### prior art.

Particularly, it is an object of the present invention to provide a modular electric circuit breaker having structural and functional features such as to allow a rapid disassembling thereof from an electric apparatus-mounting rail, particularly when it is installed in combination with other electric circuit breakers which are put side-by-side and connected by comb busbars.

This object is achieved through a modular electric circuit breaker as generally defined in the appended claim 1. The dependant claims relate to further embodiments of the circuit breaker according to the present invention.

Further features and advantages of the circuit breaker according to the invention will be clear from the description set forth below of preferred exemplary embodiments thereof, given by way of non-limiting example, with reference to the appended Figures, in which:
- Figure 1 is a front perspective view of an electric circuit breaker according to the present invention, installed on an electric apparatus-mounting rail;
- Figure 2 is a top perspective view of the circuit breaker of Figure 1;
- Figure 3 is a perspective view of an inner detail of the circuit breaker of Figure 1;
- Figure 4 is a perspective view of a first face of an inner component of the circuit breaker of Figure 1;
- Figure 5 is a perspective view of a second face of the inner component of Figure 4, which is, particularly, opposite to the one illustrated in such Figure;
- Figure 6 is a perspective view of a third face of the inner component of Figure 4;
- Figure 7 is a perspective view of the inner component of Figure 4 installed in an inner portion of the circuit breaker illustrated in Figure 3;
- Figure 8 is a perspective view of a second inner component of the circuit breaker of Figure 1;
- Figure 9 is a side perspective view of the circuit breaker of Figure 1 in a configuration released from an apparatus-mounting rail;
- Figure 10 is a perspective view of the circuit breaker of Figure 1 in an attachment configuration with an apparatus-mounting rail;

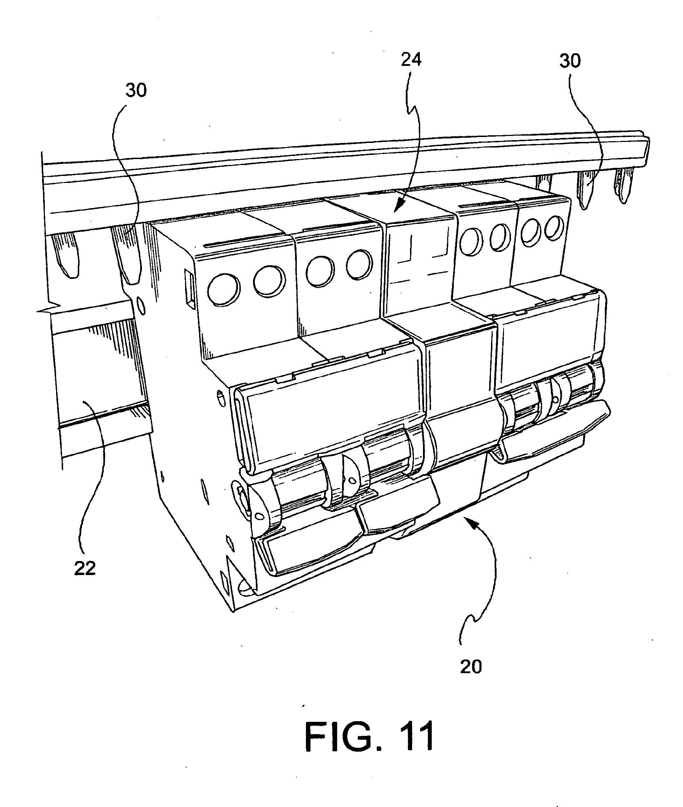

- Figure 11 is a perspective view of a group of electric circuit breakers comprising the circuit breaker of Figure 1.

In the following description, the terms "vertical", "horizontal", "upper", "lower", "high" and "low" will refer to the usual installation condition of the electric circuit breakers, in which such circuit breakers are installed along an electric apparatus-mounting rail secured on a vertical wall inside an electric board.

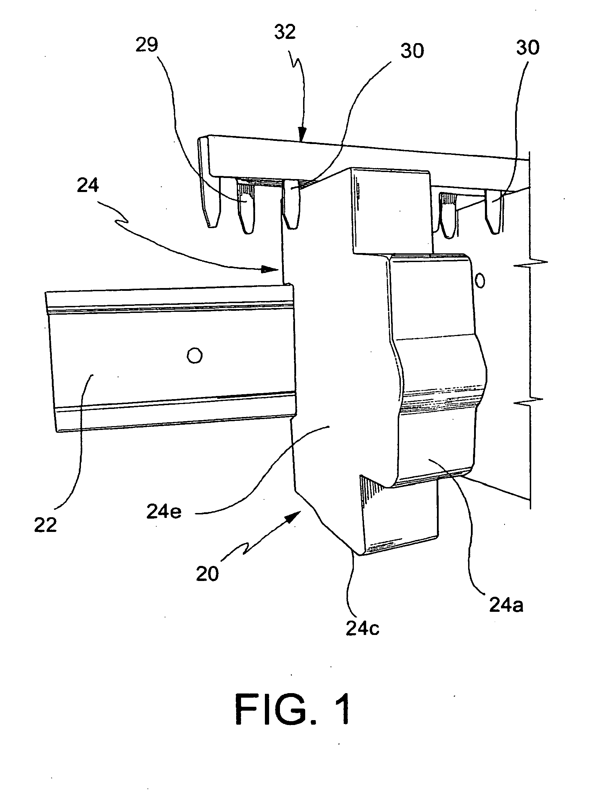

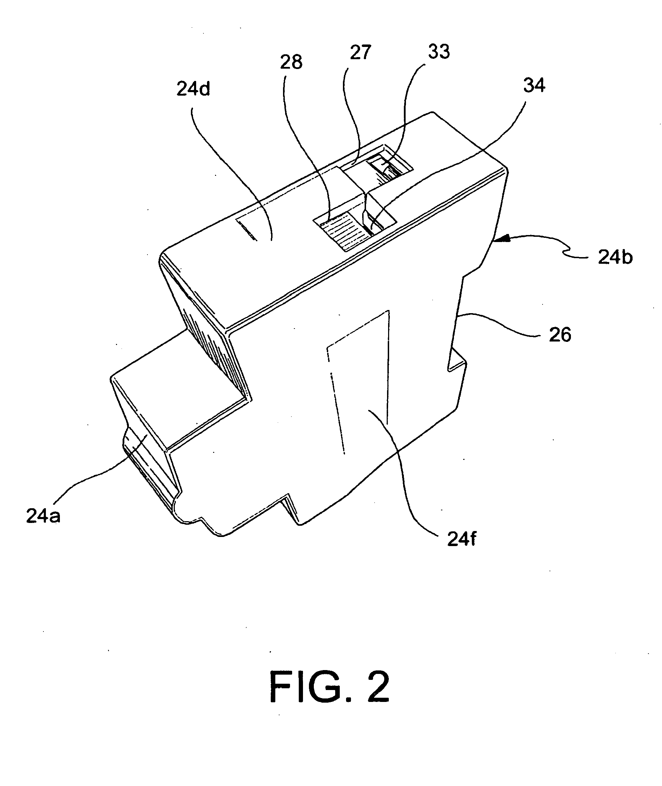

With reference to Figure 1 and Figure 2, a modular electric circuit breaker has been indicated by 20, in the exemplary case of the double-pole type, coupled to an electric apparatus-mounting rail 22.

The rail 22 is a rail of a known type, particularly a DIN rail, and the circuit breaker is removably connected to such rail through *per se* known coupling means, such as, for example, two opposite latches adapted to snap fit with respective projecting edges of the rail 22.

The circuit breaker 20 comprises a main body, an outer enclosure 24 in the example, including a front face 24a on which a control lever for the circuit breaker is prearranged, which is not shown since it is of a conventional type, a rear face 24b intended to be faced towards the rail 22, a lower face 24c, an upper face 24d, and two opposite side faces 24e and 24f adapted to be faced towards respective side faces of electric apparatuses which are put side-by-side to the circuit breaker.

The rear face 24b of the outer enclosure 24 has, particularly, a recess 26, which is intended to be located so as to bridge the rail 22 in the installed condition of the circuit breaker 20, so as to mechanically interfere with the rail 22 in order to prevent vertical translations of the circuit breaker.

On the upper face 24d of the outer enclosure 24, two first coupling openings 27, 28 are prearranged, longitudinally staggered along the face 24d, for the engagement of respective blade contacts 29, 30 inside the enclosure 24.

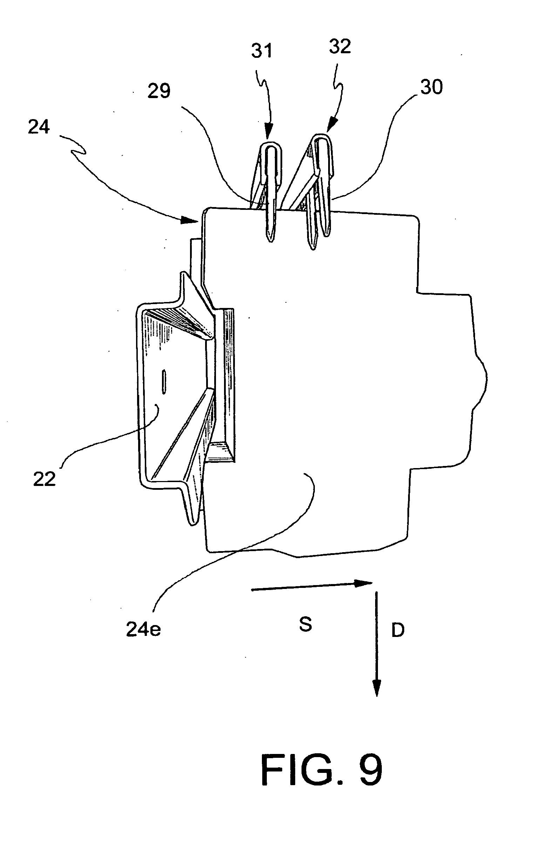

The blade contacts 29, 30 respectively belong to two busbars 31, 32 (Figure 9) arranged mutually in parallel, and electrically connected to a power supply line (not shown).

The bars 31, 32, particularly, have a comb-like shape in which the teeth of the combs correspond to the blade contacts 29, 30.

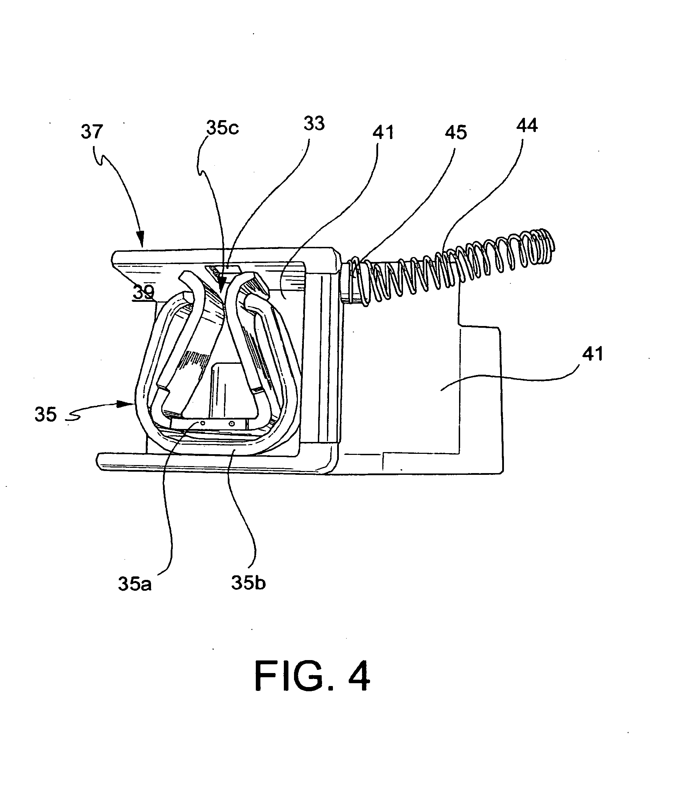

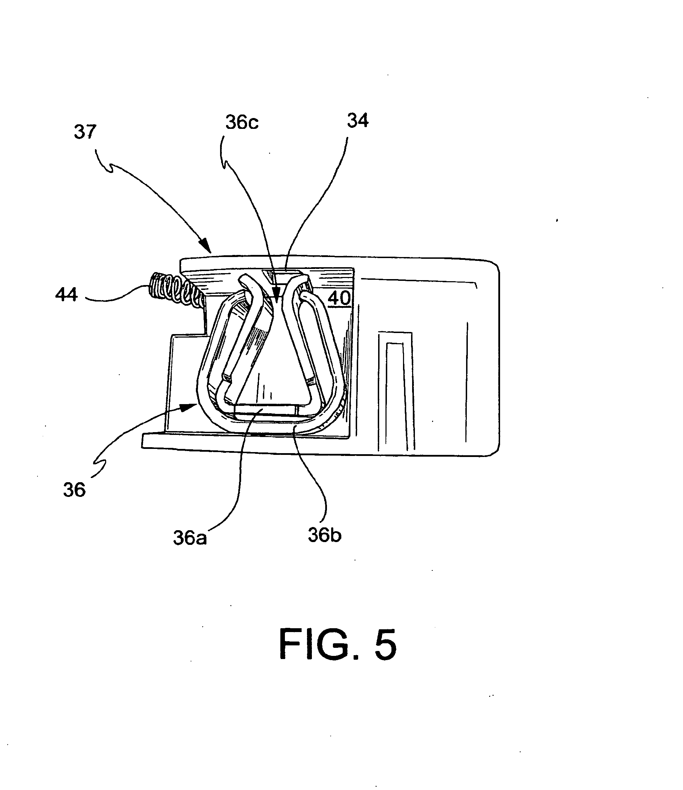

Beside the first coupling openings 27, 28, the blade contacts 29, 30 are intended to pass through two second coupling openings 33, 34, with smaller dimensions than the openings 27, 28, in order to establish an electro-mechanic coupling, of the socket-plug type in the example, with respective electric connection terminals 35, 36 (Figures 4 and 5).

Such electric connection terminals 35, 36 each comprise, in the particular embodiment, a first flexible member 35a, 36a, which is made of an electrically conductive bent foil and it is adapted to elastically couple with a respective blade contact 29, 30 of a comb busbar, and a second stiffening member 35b, 36b fitted on the first flexible member and adapted to limit the deformations thereof.

The first flexible members 35a, 36a have, particularly, a substantially delta-shaped profile.

The second stiffening member 35b, 36b, instead, have a substantially "C"-shaped profile.

The first flexible members 35a, 36a form respective slots 35c, 36c defined by gaps between pairs of laminar portions which are bent and drawn close each other, while the second stiffening members 35b, 36b act upon the opposite curves of the first flexible members 35a, 36a in order to prevent that the slots 35c, 36c exceed, for example under the effect of thermal expansions, a preestablished maximum dimension.

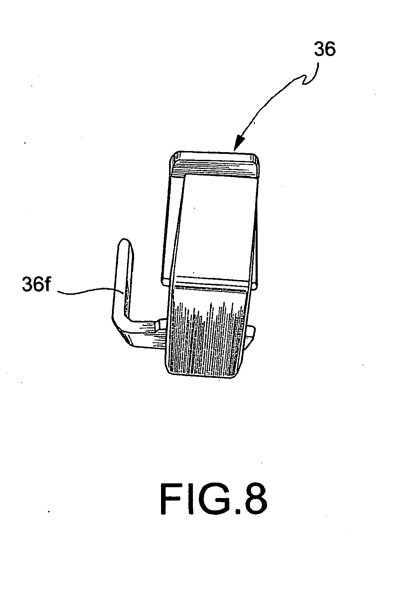

Besides, the electric connection terminals 35, 36 are provided with respective connecting means, represented in the example by two bent tongues with a substantially "L" profile, of which, only the tongue 36f of the electric connection terminal 36 is visible in Figure 8, and the function of which will be explained herein below.

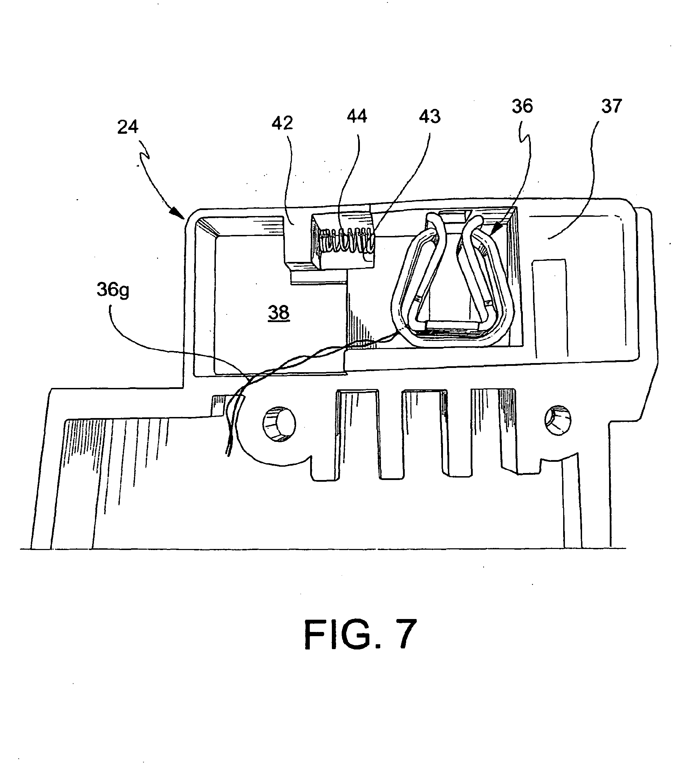

Finally, the electric connection terminals 35, 36 are connected to the electric fixed parts of the circuit breaker through respective electrically conductive flexible braids, of which only the braid 36g is visible in Figure 7. The flexible braids are, for example, connected to the first flexible members 35a, 36a by means of holes drilled in the second stiffening member 35b, 36b.

The second coupling openings 33, 34 are achieved, particularly, on a mobile support means for the electric connection terminals 35, 36 which, in the exemplified embodiment, is represented by a sliding member 37

### (Figure 4).

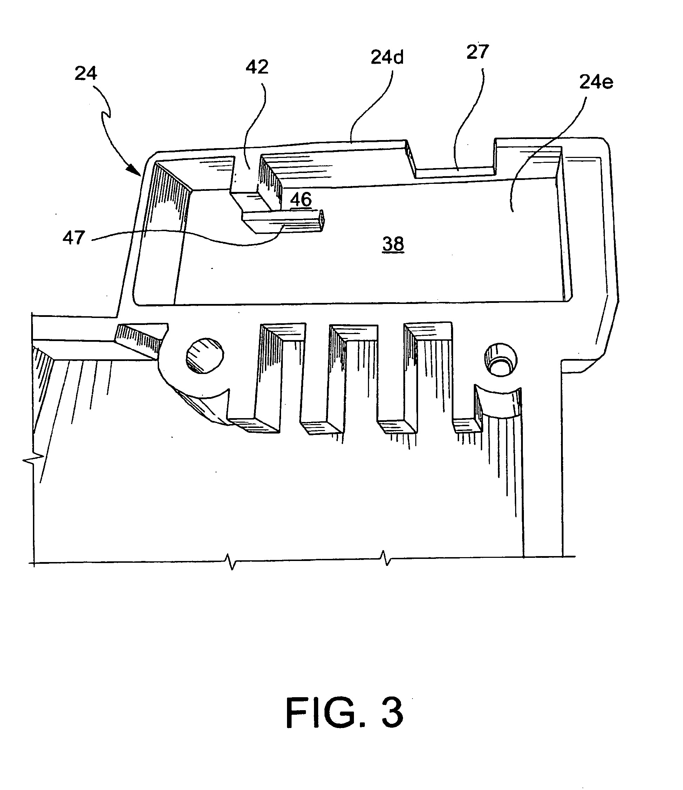

The sliding member is slidable within a guide chamber 38 prearranged inside the outer enclosure 24 of the circuit breaker. A portion of such guide chamber is visible in Figure 3.

The sliding member is, particularly, slidable between a first and a second opposite abutting positions in a direction orthogonal to the electric apparatus-mounting rail 22.

The guide chamber 38 is defined more precisely, in the exemplary case, by the upper face 24d of the outer enclosure 24, by the opposite side faces 24e, 24f of such enclosure, and by a slip plane inside the circuit breaker and opposed to the upper face 24d.

The sliding member 37 comprises, in the exemplified embodiment, two compartments 39, 40, (Figures 4 and 5) inside which the electric connection terminals 35, 36, respectively, are housed.

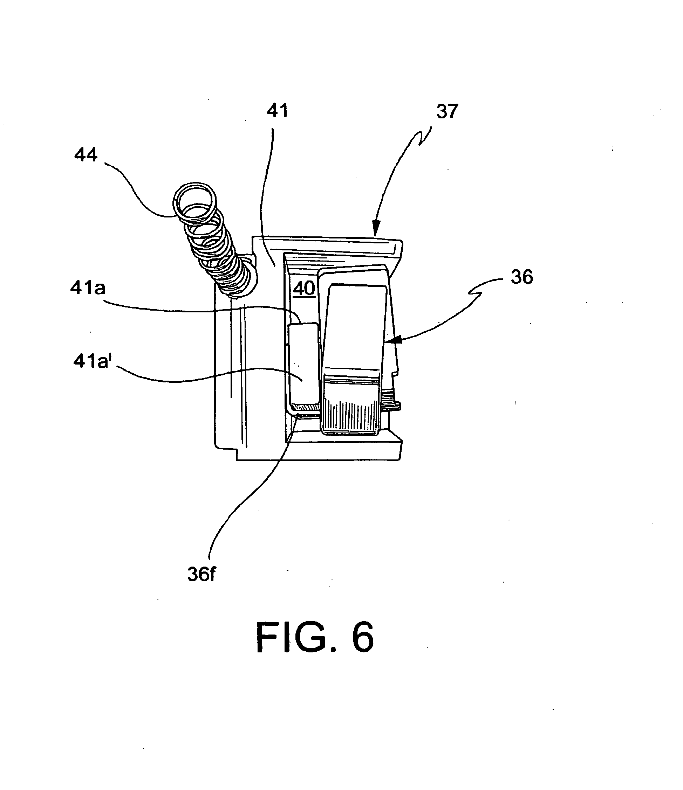

The compartments 39, 40 are longitudinally mutually staggered and divided by a partition septum 41 (Figures 4 and 6).

The partition septum 41 is equipped with second connecting means adapted to cooperate with the bent tongues of the electric connection terminals 35, 36 in order to retain such terminals in predetermined positions inside the compartments 39, 40.

The second connecting means are, in the example, second tongues, also having an "L"-shaped profile, each of which projects from a respective face of the partition septum 41 and longitudinally extends in the running direction of the sliding member 37. Such second tongues (of which only 41a is visible in Figure 6) have, at the free ends thereof, respective retaining teeth (of which, the tooth 41a' is -not clearly- visible in Figure 6) faced towards the partition septum 41.

Particularly, the bent tongues of the electric connection terminals 35, 36 are, each, snap fitted between the partition septum 41 and a respective second tongue, so as to maintain the electric connection terminals in a position such that the slots 35c, 36c are always aligned with the second coupling openings 33, 34, respectively.

The guide chamber 38 of the sliding member 37 includes an abutting member 42 (Figures 3 and 7), against which the sliding member is intended to abut when it is in the second abutment position. In such abutment position, particularly, a notch 43 (Figure 7) of the partition septum 41, having a shape which is complementary relative to the abutting member 42, turns out to be in abutment against such abutting member.

The guide chamber 38 includes therein an elastic member, a spring 44 in the example, which is sandwiched between the sliding member 37 and the abutting member 42.

The spring 44 is particularly intended to oppose to the movement of the sliding member in order to bring it back to the first abutment position.

More particularly, the spring 44 comprises a first end fitted on a projection 45 (Figure 4) prearranged on a wall of the compartment 39 of the sliding member 37, and a second end abutting against the abutting member 42.

The spring second end 42 is, particularly, housed in a housing seat 46 (Figure 3), which is defined by the abutting member 42, a rib 47, and the side 24e and upper 24d faces of the circuit breaker 20 outer enclosure 24.

When the sliding member 37 is located in the first abutment position, at which it is abutted against the wall of the guide chamber 38 defined by the rear face 24b of the outer enclosure 24, the spring 44 is substantially uncompressed, or slightly compressed, and the second coupling openings 33, 34 are located in a first operative position (Figure 2) wherein they are located at respective first ends of the first coupling openings 27, 28.

When the sliding member 37 is located in the second abutment position, the spring 44 is, instead, highly compressed, and the second coupling openings 33, 34 are located in a second operative position wherein they are located at respective second ends of the first coupling openings 27, 28.

As regards the installation of the circuit breaker 20 to the apparatus-mounting rail 22, this is accomplished as described above relative to the prior art, except for the step of screwing the screw clamps (since they are not present).

As regards, on the other hand, the removal of the circuit breaker, it occurs in the manner described below.

The circuit breaker 20 is to be considered as being initially installed on the apparatus-mounting rail 22 and connected to the busbars 31, 32.

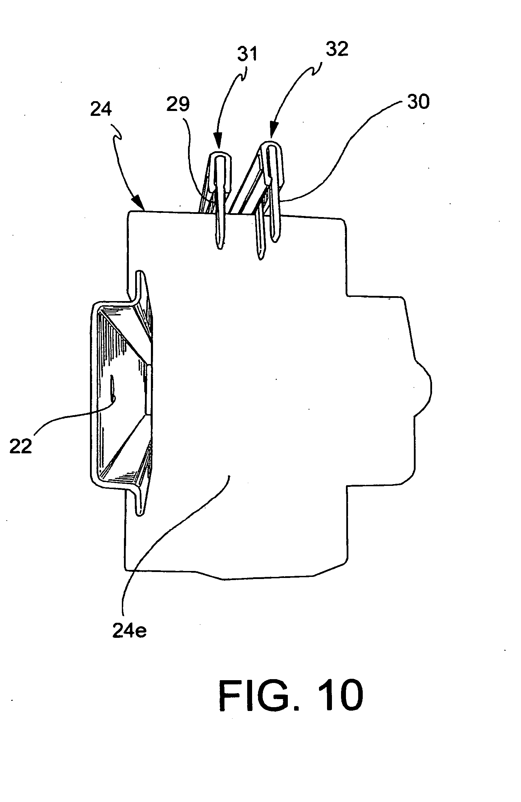

In such condition, the sliding member 37 is located, particularly, in the second abutment position (Figure 10).

In order to remove the circuit breaker from the apparatus-mounting rail, it is necessary to preliminarily release it from the rail, for example by disengaging two opposite latches, not represented since they are of a conventional type, from the two projecting edges of the same apparatus-mounting rail.

Once unconstrained, the circuit breaker is made to translate orthogonally and horizontally relative to the apparatus-mounting rail 22 (the arrow S direction in Figure 9) so as to draw it away from the latter, until when the recess 26 of the circuit breaker outer enclosure 24 reaches a position in which it does not interfere with the rail 22 (Figure 9).

In such position, the sliding member 37 is in the first abutment position.

During the drawing away of the circuit breaker 20 from the apparatus-mounting rail, in fact, the circuit breaker outer enclosure 24 translates relative to the sliding member 37, which is constrained to the blade contacts 29, 30 of the busbars 31, 32, until when such sliding member comes to be in the first abutment position.

At this point, the circuit breaker can be easily removed through a vertical translation (the arrow D direction in Figure 9), downwardly in the exemplary case, adapted to allow the disengagement of the blade contacts 29, 30 from the electric connection terminals 35, 36, through the first 27, 28 and the second 33, 34 coupling openings.

According to what has been previously described, it is therefore possible to understand how a modular electric circuit breaker according to the present invention is such as to solve the above-mentioned drawbacks with reference to the prior art.

Particularly, the presence of electric connection terminals which are mobile relative to the outer enclosure of the circuit breaker allows for a rapid and independent disassembling of the same from an electric apparatus-mounting rail, particularly when the circuit breaker is installed in combination with other electric circuit breakers brought in a side-by-side relationship, and it is connected to these by one or more comb busbars.

In fact, the possibility to move the outer enclosure of the circuit breaker relative to the electric connection terminals, inside which the fixed teeth of the combs are engaged, allows for the removal of the circuit breaker without requiring the disengagement of the comb busbars from the circuit breakers brought in a side-by-side relationship.

A modular electric circuit breaker according to the present invention further allows the removal of the same without the aid of equipments, thus making still easier the carrying out of this operation.

Furthermore, a circuit breaker according to the present invention makes the installation of a new circuit breaker adapted to replace a circuit breaker previously removed by the group of circuit breakers easier.

The installation of the new circuit breaker can, in fact, be carried out inversely performing the above-described operations in the case of the removal of the circuit breaker from the apparatus-mounting rail, consequently eliminating, even in the installation step, the need to preliminarily draw the busbars from the group of circuit breakers.

According to another embodiment of the invention, the sliding member 37 can be located in the lower part of the circuit breaker, so as to allow the engagement of a comb busbar from the bottom.

According to another embodiment of the invention, the electrically conductive flexible braids for the electric connection of the electric connection terminals with the other electric parts of the circuit breaker are replaced by sliding electric contacts, such as conductive tracks, on which the sliding member is intended to slide.

According to another embodiment of the invention, screw clamps can be prearranged on the sliding member. In such a case, however, the advantages related to the fact of avoiding the unscrewing operation and, consequently, the use of equipments, are defeated.

In the end, it will be appreciated that the invention can be applied also to single-pole circuit breakers, in which case an individual electric connection terminal (intended to be connected to an individual busbar), and an individual compartment of the circuit breaker sliding member will be provided.

It being understood the principle of the invention, the embodiments and the embodiment details will be able to be widely modified compared to what has been described and illustrated by way of non-limitative example only, without for this departing from the scope of the invention as defined in the appended claims.

## Claims

1. A modular electric circuit breaker (20) adapted to be removably installed on an electric apparatus-mounting rail (22) of an electric board, comprising:
- a main body (24);
- at least one electric connection terminal (35, 36) for the electromechanical connection of the circuit breaker to a respective comb busbar (31, 32);
- a mobile support means (37) of said at least one electric connection terminal (35, 36) adapted to allow a relative motion between the electric connection terminal and the main body (24) of the circuit breaker, said mobile support means (37) being slidable between a first and a second opposite abutment positions; and
- at least one first (27, 28) and at least one second (33, 34) coupling openings which are both intended to be passed through by a blade contact (29, 30) of said comb busbar (31, 32), said first and second coupling openings being prearranged respectively on the main body (24) of the circuit breaker (20) and on the mobile support means (37);
**characterized in that** said second (33, 34) coupling opening has smaller dimensions than said first (27, 28) coupling opening and said main body (24) is adapted to translate relative to said mobile support means (37), while such support means is constrained to said blade contact (29, 30), until when said mobile support means, from the second abutment position, comes to be in the first abutment position.

2. The modular electric circuit breaker according to claim 1, wherein the mobile support means comprise a sliding member (37) which is slidable between said first and second opposite abutment positions.

3. The modular electric circuit breaker according to claim 2, wherein said sliding member (37) is slidable in the orthogonal direction relative to said electric apparatus-mounting rail (22).

4. The modular electric circuit breaker according to claims 2 or 3, wherein the sliding member (37) is slidable within a guide chamber (38) prearranged inside the main body (24) of the circuit breaker (20).

5. The modular electric circuit breaker according to one of the claims 2 to 4, wherein said sliding member (37) includes at least one compartment (39, 40), inside which said at least one electric connection terminal (35, 36) is housed.

6. The modular electric circuit breaker according to claim 5, wherein the electric connection terminals (35, 36) are at least two and are housed in corresponding compartments (39, 40) of the sliding member (37), said compartments (39, 40) of the sliding member being longitudinally mutually staggered relative to a guide chamber (38) of the sliding member.

7. The modular electric circuit breaker according to any claim 2 to 6, wherein said first and second coupling openings are prearranged respectively on the main body (24) of the circuit breaker (20) and on the sliding member (37).

8. The modular electric circuit breaker according to claim 7, wherein
when the sliding member (37) is located in the first abutment position, said second coupling opening (33, 34) is located at a first end of the first coupling opening (27, 28), and
when the sliding member (37) is located in the second abutment position, said second coupling opening (33, 34) is located at a second end of the first coupling opening (27, 28).

9. The modular electric circuit breaker according to any claim 2 to 8, wherein said at least one electric connection terminal (35, 36) comprises a first electrically conductive flexible member (35a, 36a) and a second stiffening member (35b, 36b); the first flexible member being adapted to elastically couple to a respective blade contact 29, 30 of a comb busbar (31,32), and the second stiffening member being adapted to limit the deformations of the first flexible member.

10. The modular electric circuit breaker according to claim 9, wherein the first flexible member (35a, 36a) of said at least one electric connection terminal (35, 36) has a substantially delta-shaped profile.

11. The modular electric circuit breaker according to claim 9 or 10, wherein the second stiffening member (35b, 36b) of said at least one electric connection terminal (35, 36) has a substantially C-shaped profile.

12. The modular electric circuit breaker according to any claim 9 to 11, wherein the second stiffening member (35b, 36b) of the at least one electric connection terminal (35, 36) is fitted on the first flexible member (35a, 36a) of said electric connection terminal.

13. The modular electric circuit breaker according to any claim 2 to 12, wherein said at least one electric connection terminal (35, 36) comprises connecting means (36f) adapted to cooperate with second connecting means (41a) of said sliding member (37) of the circuit breaker (20) in order to maintain the electric connection terminal in a predetermined position.

14. The modular electric circuit breaker according to claim 13, wherein said predetermined position of the electric connection terminal (35, 36) is such that a slot (35c, 36c) formed between pairs of laminar portions which are bent and drawn close each other of said electric connection terminal is always aligned with said at least one second coupling opening (33, 34) of the sliding member (37).

15. The modular electric circuit breaker according to claim 13 or 14, wherein said connecting means (36f) of the at least one electric connection terminal, and said second connecting means (41a) of the sliding member are tongues having a substantially L-shaped profile.

16. The modular electric circuit breaker according to any claim 2 to 15, comprising an abutting member (42) against which said sliding member (37) is intended to abut when it is in the second abutment position.

17. The modular electric circuit breaker according to claim 16, comprising an elastic member (44) sandwiched between the sliding member (37) and the abutting member (42), the elastic member being intended to counter-act the movement of the sliding member.

18. The modular electric circuit breaker according to claim 17, wherein the elastic member (44) counter-acts the movement of the sliding member (37) in order to bring it back to the first abutment position.

19. The modular electric circuit breaker according to claim 17 or 18, wherein said elastic member (44) is a spring having a first end fitted on a projection (45) prearranged on the sliding member (37), and a second end in abutment against the abutting member (42).

20. The modular electric circuit breaker according to claim 19, wherein said second end of the spring (44) is housed in a housing seat (46).

21. The modular electric circuit breaker according to claim 20, wherein said housing seat (46) of the second end of the spring (44) is at least partially defined by said abutting member(42).

22. The modular electric circuit breaker according to any claim 1 to 4, wherein said at least one electric connection terminal is a screw clamp prearranged on said mobile support means.

23. The modular electric circuit breaker according to any preceding claim, wherein said at least one electric connection terminal (35, 36) is connected to the fixed electric parts of the circuit breaker through a respective electrically conductive flexible braid (36g).

24. The modular electric circuit breaker according to any claim 1 to 22, wherein said at least one electric connection terminal (35, 36) is connected to the fixed electric parts of the circuit breaker through sliding electric contacts.

25. A method for removing a modular electric circuit breaker (20) from an electric apparatus-mounting rail (22), the circuit breaker being connected to at least one comb busbar (31, 32) and comprising:
- a main body (24);
- at least one electric connection terminal (35, 36) for the electromechanical connection of the circuit breaker to said comb busbar (31, 32);
- a mobile support means (37) of said at least one electric connection terminal (35, 36) adapted to allow a relative motion between the electric connection terminal and the main body (24) of the circuit breaker, said mobile support means (37) being slidable between a first and a second opposite abutment positions; and
- at least one first (27, 28) and at least one second (33, 34) coupling openings which are both intended to be passed through by a blade contact (29, 30) of said comb busbar (31, 32), said first and second coupling openings being prearranged respectively on the main body (24) of the circuit breaker (20) and on the mobile support means (37);
**characterized in that** said second (33, 34) coupling opening has smaller dimensions than said first (27, 28) coupling opening and said main body (24) is adapted to translate relative to said mobile support means (37), while such support means is constrained to said blade contact (29, 30), until when said mobile support means, from the second abutment position, comes to be in the first abutment position, and **in that** the method comprises the steps of:
a) releasing the circuit breaker from the electric apparatus-mounting rail;
b) translating the circuit breaker horizontally and orthogonally relative to the electric apparatus-mounting rail so as to draw it away from the latter;
c) vertically translating the circuit breaker in order to allow the uncoupling of the circuit breaker from said at least one comb busbar.

## Patentansprüche

1. Modularer elektrischer Schutzschalter (20), der geeignet ist, entfernbar auf einer Montageschiene (22) einer elektrischen Vorrichtung einer elektrischen Baugruppe installiert zu werden, der aufweist:
- einen Hauptkörper (24);
- wenigstens einen elektrischen Verbindungsanschluss (35, 36) für die elektromechanische Verbindung des Schutzschalters mit einer jeweiligen Kammschiene (32, 32);
- eine mobile Halteeinrichtung (37) des wenigstens einen elektrischen Verbindungsanschlusses (35, 36), die geeignet ist, eine Relativbewegung zwischen dem elektrischen Verbindungsanschluss und dem Hauptkörper (24) des Schutzschalters zuzulassen, wobei die mobile Halteeinrichtung (37) zwischen einer ersten und einer zweiten entgegengesetzten Auflagerposition verschiebbar ist; und
- wenigstens eine erste (27, 28) und wenigstens eine zweite (33, 34) Kopplungsöffnung, die beide dafür gedacht sind, durch einen Messerkontakt (29, 30) der Kammschiene (31, 32) geführt zu werden, wobei die ersten und zweiten Kopplungsöffnungen jeweils vorab auf dem Hauptkörper (24) des Schutzschalters (20) und auf der mobilen Halteeinrichtung (37) angeordnet sind;
**dadurch gekennzeichnet, dass** die zweite (33, 34) Kopplungsöffnung kleinere Abmessungen als die erste (27, 28) Kopplungsöffnung hat und der Hauptkörper (24) geeignet ist, relativ zu der mobilen Halteeinrichtung (37) verschoben zu werden, während eine derartige Halteeinrichtung auf den Messerkontakt (29, 30) beschränkt ist, bis die mobile Halteeinrichtung von der zweiten Auflagerposition in die erste Auflagerposition kommt.

2. Modularer elektrischer Schutzschalter nach Anspruch 1, wobei die mobilen Halteeinrichtungen ein Schieberelement (37) aufweisen, das zwischen der ersten und der zweiten entgegengesetzten Auflagerposition verschiebbar ist.

3. Modularer elektrischer Schutzschalter nach Anspruch 2, wobei das Schieberelement (37) in der orthogonalen Richtung relativ zu der Montageschiene (22) der elektrischen Vorrichtung verschiebbar ist.

4. Modularer elektrischer Schutzschalter nach Anspruch 2 oder 3, wobei das Schieberelement (37) innerhalb einer Führungskammer (38) verschiebbar ist, die im Inneren des Hauptkörpers (24) des Schutzschalters (20) vorab angeordnet ist.

5. Modularer elektrischer Schutzschalter nach einem der Ansprüche 2 bis 4, wobei das Schieberelement (37) wenigstens ein Abteil (39, 40) umfasst, innerhalb dessen der wenigstens eine elektrische Verbindungsanschluss (35, 36) untergebracht ist.

6. Modularer elektrischer Schutzschalter nach Anspruch 5, wobei die elektrischen Verbindungsanschlüsse (35, 36) wenigstens zwei sind und in entsprechenden Abteilen (39, 40) des Schieberelements (37) untergebracht sind, wobei die Abteile (39, 40) des Schieberelements relativ zu einer Führungskammer (38) des Schieberelements gegenseitig gestaffelt sind.

7. Modularer elektrischer Schutzschalter nach einem der Ansprüche 2 bis 6, wobei die ersten und zweiten Kopplungsöffnungen jeweils vorab auf dem Hauptkörper (24) des Schutzschalters (20) und auf dem Schieberelement (37) angeordnet sind.

8. Modularer elektrischer Schutzschalter nach Anspruch 7, wobei
wenn das Schieberelement (37) sich in der ersten Auflagerposition befindet, die zweite Kopplungsöffnung (33, 34) sich an einem ersten Ende der ersten Kopplungsöffnung (27, 28) befindet, und
wenn das Schieberelement (37) sich in der zweiten Auflagerposition befindet, die zweite Kopplungsöffnung (33, 34) sich an einem zweiten Ende der ersten Kopplungsöffnung (27, 28) befindet.

9. Modularer elektrischer Schutzschalter nach einem der Ansprüche 2 bis 8, wobei der wenigstens eine elektrische Verbindungsanschluss (35, 36) ein erstes elektrisch leitendes flexibles Element (35a, 36a) und ein zweites Versteifungselement (35b, 36b) aufweist; wobei das erste flexible Element geeignet ist, elastisch mit einem jeweiligen Messerkontakt (29, 30) einer Kammschiene (31, 32) zu koppeln, und das zweite Versteifungselement geeignet ist, die Verformungen des ersten flexiblen Elements zu begrenzen.

10. Modularer elektrischer Schutzschalter nach Anspruch 9, wobei das erste flexible Element (35a, 36a) des wenigstens einen elektrischen Verbindungsanschlusses (35, 36) ein im Wesentlichen deltaförmiges Profil hat.

11. Modularer elektrischer Schutzschalter nach Anspruch 9 oder 10, wobei das zweite Versteifungselement (35b, 36b) des wenigstens einen elektrischen Verbindungsanschlusses (35, 36) ein im Wesentlichen C-förmiges Profil hat.

12. Modularer elektrischer Schutzschalter nach einem der Ansprüche 9 bis 11, wobei das zweite Versteifungselement (35b, 36b) des wenigstens einen elektrischen Verbindungsanschlusses (35, 36) auf das erste flexible Element (35a, 36a) des elektrischen Verbindungsanschlusses montiert ist.

13. Modularer elektrischer Schutzschalter nach einem der Ansprüche 2 bis 12, wobei der wenigstens eine elektrische Verbindungsanschluss (35, 36) Verbindungseinrichtungen (26f) aufweist, die geeignet sind, mit zweiten Verbindungseinrichtungen (41a) des Schieberelements (37) des Schutzschalters (20) zusammen zu wirken, um den elektrischen Verbindungsanschluss in einer vorgegebenen Position zu halten.

14. Modularer elektrischer Schutzschalter nach Anspruch 13, wobei die vorbestimmte Position des elektrischen Verbindungsanschlusses (35, 36) derart ist, dass ein Schlitz (35c, 36c), der zwischen Paaren flächiger Abschnitte des Verbindungsanschlusses, die gebogen und dicht aneinander gezogen sind, ausgebildet ist, immer mit der wenigstens einen zweiten Kopplungsöffnung (33, 34) des Schieberelements (37) ausgerichtet ist.

15. Modularer elektrischer Schutzschalter nach Anspruch 13 oder 14, wobei die Verbindungseinrichtung (36f) des wenigstens einen elektrischen Verbindungsanschlusses und die zweite Verbindungseinrichtung (41a) des Schieberelements Zungen mit einem im Wesentlichen L-förmigen Profil sind.

16. Modularer elektrischer Schutzschalter nach einem der Ansprüche 2 bis 15, der ein Auflagerelement (42) aufweist, gegen das das Schieberelement (37) anliegen soll, wenn es in der zweiten Auflagerposition ist.

17. Modularer elektrischer Schutzschalter nach Anspruch 16, der ein elastisches Element (44) aufweist, das zwischen dem Schieberelement (37) und dem Auflagerelement (42) angeordnet ist, wobei das elastische Element dafür gedacht ist, der Bewegung des Schieberelements entgegen zu wirken.

18. Modularer elektrischer Schutzschalter nach Anspruch 17, wobei das elastische Element (44) der Bewegung des Schieberelements (37) entgegen wirkt, um es in die erste Auflagerposition zurück zu bringen.

19. Modularer elektrischer Schutzschalter nach einem der Ansprüche 17 oder 18, wobei das elastische Element (44) eine Feder ist, die erstes Ende, das auf einen Vorsprung (45) montiert ist, der vorab auf dem Schieberelement (37) angeordnet ist, und ein zweites Ende hat, das gegen das Auflagerelement (42) anliegt.

20. Modularer elektrischer Schutzschalter nach Anspruch 19, wobei das zweite Ende der Feder (44) in einem Gehäusesitz (46) aufgenommen ist.

21. Modularer elektrischer Schutzschalter nach Anspruch 20, wobei der Gehäusesitz (46) des zweiten Endes der Feder (44) wenigstens teilweise durch das Auflagerelement (42) definiert ist.

22. Modularer elektrischer Schutzschalter nach einem der Ansprüche 1 bis 4, wobei der wenigstens eine elektrische Verbindungsanschluss eine Schraubzwinge ist, die vorab auf der mobilen Halteeinrichtung angeordnet ist.

23. Modularer elektrischer Schutzschalter nach einem der vorangehenden Ansprüche, wobei der wenigstens eine elektrische Verbindungsanschluss (35, 36) durch eine jeweilige elektrisch leitende flexible Litze (36g) mit den festen elektrischen Teilen des Schutzschalters verbunden ist.

24. Modularer elektrischer Schutzschalter nach einem der Ansprüche 1 bis 22, wobei der wenigstens eine elektrische Verbindungsanschluss (35, 36) durch elektrische Schiebekontakte mit den festen elektrischen Teilen des Schutzschalters verbunden ist.

25. Verfahren zum Entfernen eines modularen elektrischen Schutzschalters (20) von einer Montageschiene (22) einer elektrischen Vorrichtung, wobei der Schutzschalter mit wenigstens einer Kammschiene (31, 32) verbunden ist und aufweist:
- einen Hauptkörper (24);
- wenigstens einen elektrischen Verbindungsanschluss (35, 36) für die elektromechanische Verbindung des Schutzschalters mit einer jeweiligen Kammschiene (32, 32);
- eine mobile Halteeinrichtung (37) des wenigstens einen elektrischen Verbindungsanschlusses (35, 36), die geeignet ist, eine Relativbewegung zwischen dem elektrischen Verbindungsanschluss und dem Hauptkörper (24) des Schutzschalters zuzulassen, wobei die mobile Halteeinrichtung (37) zwischen einer ersten und einer zweiten entgegengesetzten Auflagerposition verschiebbar ist; und
- wenigstens eine erste (27, 28) und wenigstens eine zweite (33, 34) Kopplungsöffnung, die beide dafür gedacht sind, durch einen Messerkontakt (29, 30) der Kammschiene (31, 32) geführt zu werden, wobei die ersten und zweiten Kopplungsöffnungen jeweils vorab auf dem Hauptkörper (24) des Schutzschalters (20) und auf der mobilen Halteeinrichtung (37) angeordnet sind;
**dadurch gekennzeichnet, dass** die zweite (33, 34) Kopplungsöffnung kleinere Abmessungen als die erste (27, 28) Kopplungsöffnung hat und der Hauptkörper (24) geeignet ist, relativ zu der mobilen Halteeinrichtung (37) verschoben zu werden, während eine derartige Halteeinrichtung auf den Messerkontakt (29, 30) beschränkt ist, bis die mobile Halteeinrichtung von der zweiten Auflagerposition in die erste Auflagerposition kommt, und dadurch, dass das Verfahren die folgenden Schritte aufweist:
a) Lösen des Schutzschalters aus der Montageschiene einer elektrischen Vorrichtung;
b) horizontales und orthogonales Verschieben des Schutzschalters relativ zu der Montageschiene einer elektrischen Vorrichtung, um ihn von der letzteren weg zu ziehen;
c) vertikales Verschieben des Schutzschalters, um das Entkoppeln des Schutzschalters von der wenigstens einen Kammschiene zu ermöglichen.

## Revendications

1. Disjoncteur électrique modulaire (20) adapté pour être installé de façon amovible sur un rail de montage d'appareil électrique (22) d'un tableau électrique, comprenant :
un corps principal (24) ;
au moins une borne de connexion électrique (35, 36) pour la connexion électromécanique du disjoncteur à une barre omnibus à peigne respective (31, 32) ;
un moyen de support mobile (37) de ladite au moins une borne de connexion électrique (35, 36) adapté pour permettre un mouvement relatif entre la borne de connexion électrique et le corps principal (24) du disjoncteur, ledit moyen de support mobile (37) pouvant coulisser entre des première et deuxième positions de butée opposées ; et
au moins une première (27, 28) et au moins une deuxième (33, 34) ouverture de couplage qui sont destinées toutes deux à être traversées par un contact sabre (29, 30) de ladite barre omnibus à peigne (31, 32), lesdites première et deuxième ouvertures de couplage étant prédisposées respectivement sur le corps principal (24) du disjoncteur (20) et sur le moyen de support mobile (37) ;
**caractérisé en ce que** ladite deuxième (33, 34) ouverture de couplage présente des dimensions plus petites que ladite première (27, 28) ouverture de couplage et ledit corps principal (24) est adapté pour se déplacer par rapport audit moyen de support mobile (37), tandis que ce moyen de support est contraint avec ledit contact sabre (29, 30), jusqu'au moment où ledit moyen de support mobile, à partir de la deuxième position de butée, arrive à la première position de butée.

2. Disjoncteur électrique modulaire selon la revendication 1, dans lequel le moyen de support mobile comprend un élément coulissant (37) qui peut coulisser entre lesdites première et deuxième positions de butée opposées.

3. Disjoncteur électrique modulaire selon la revendication 2, dans lequel ledit élément coulissant (37) peut coulisser dans la direction orthogonale par rapport audit rail de montage d'appareil électrique (22).

4. Disjoncteur électrique modulaire selon les revendications 2 ou 3, dans lequel l'élément coulissant (37) peut coulisser dans une chambre de guidage (38) prédisposée à l'intérieur du corps principal (24) du disjoncteur (20).

5. Disjoncteur électrique modulaire selon l'une des revendications 2 à 4, dans lequel ledit élément coulissant (37) comporte au moins un compartiment (39, 40), à l'intérieur duquel ladite au moins une borne de connexion électrique (35, 36) est logée.

6. Disjoncteur électrique modulaire selon la revendication 5, dans lequel les bornes de connexion électriques (35, 36) sont au moins deux et sont logées dans des compartiments correspondants (39, 40) de l'élément coulissant (37), lesdits compartiments (39, 40) de l'élément coulissant étant mutuellement échelonnés de manière longitudinale par rapport à une chambre de guidage (38) de l'élément coulissant.

7. Disjoncteur électrique modulaire selon l'une des revendications 2 à 6, dans lequel lesdites première et deuxième ouvertures de couplage sont prédisposées respectivement sur le corps principal (24) du disjoncteur (20) et sur l'élément coulissant (37).

8. Disjoncteur électrique modulaire selon la revendication 7, dans lequel
lorsque l'élément coulissant (37) est situé dans la première position de butée, ladite deuxième ouverture de couplage (33, 34) est située au niveau d'une première extrémité de la première ouverture de couplage (27, 28), et
lorsque l'élément coulissant (37) est situé dans la deuxième position de butée, ladite deuxième ouverture de couplage (33, 34) est située au niveau d'une deuxième extrémité de la première ouverture de couplage (27, 28).

9. Disjoncteur électrique modulaire selon l'une des revendications 2 à 8, dans lequel ladite au moins une borne de connexion électrique (35, 36) comprend un premier élément flexible électriquement conducteur (35a, 36a) et un deuxième élément de raidissement (35b, 36b) ; le premier élément flexible étant adapté pour se coupler de manière élastique à un contact sabre respectif 29, 30 d'une barre omnibus à peigne (31, 32), et le deuxième élément de raidissement étant adapté pour limiter les déformations du premier élément flexible.

10. Disjoncteur électrique modulaire selon la revendication 9, dans lequel le premier élément flexible (35a, 36a) de ladite au moins une borne de connexion électrique (35, 36) présente un profil essentiellement en forme de delta.

11. Disjoncteur électrique modulaire selon la revendication 9 ou 10, dans lequel le deuxième élément de raidissement (35b, 36b) de ladite au moins une borne de connexion électrique (35, 36) présente un profil essentiellement en forme de C.

12. Disjoncteur électrique modulaire selon l'une des revendications 9 à 11, dans lequel le deuxième élément de raidissement (35b, 36b) de l'au moins une borne de connexion électrique (35, 36) est adaptée sur le premier élément flexible (35a, 36a) de ladite borne de connexion électrique.

13. Disjoncteur électrique modulaire selon l'une des revendications 2 à 12, dans lequel ladite au moins une borne de connexion électrique (35, 36) comprend un moyen de connexion (36f) adapté pour coopérer avec un deuxième moyen de connexion (41a) dudit élément coulissant (37) du disjoncteur (20) afin de maintenir la borne de connexion électrique dans une position prédéterminée.

14. Disjoncteur électrique modulaire selon la revendication 13, dans lequel ladite position prédéterminée de la borne de connexion électrique (35, 36) est telle qu'une fente (35c, 36c), formée entre des paires de parties laminaires qui sont pliées et tirées les unes près des autres de ladite borne de connexion électrique, soit toujours alignée avec ladite au moins une deuxième ouverture de couplage (33, 34) de l'élément coulissant (37).

15. Disjoncteur électrique modulaire selon la revendication 13 ou 14, dans lequel ledit moyen de connexion (36f) de l'au moins une borne de connexion électrique, et ledit deuxième moyen de connexion (41a) de l'élément coulissant se présente en languettes ayant un profil essentiellement en forme de L.

16. Disjoncteur électrique modulaire selon l'une des revendications 2 à 15, comprenant un élément de butée (42) contre lequel ledit élément coulissant (37) est destiné à venir en butée lorsqu'il est dans la deuxième position de butée.

17. Disjoncteur électrique modulaire selon la revendication 16, comprenant un élément élastique (44) pris en sandwich entre l'élément coulissant (37) et l'élément de butée (42), l'élément élastique étant destiné à contrebalancer le mouvement de l'élément coulissant.

18. Disjoncteur électrique modulaire selon la revendication 17, dans lequel l'élément élastique (44) contrebalance le mouvement de l'élément coulissant (37) afin de le ramener vers la première position de butée.

19. Disjoncteur électrique modulaire selon la revendication 17 ou 18, dans lequel ledit élément élastique (44) est un ressort ayant une première extrémité montée sur une saillie (45) prédisposée sur l'élément coulissant (37), et une deuxième extrémité en butée contre l'élément de butée (42).

20. Disjoncteur électrique modulaire selon la revendication 19, dans lequel ladite deuxième extrémité du ressort (44) est logée dans un siège de logement (46).

21. Disjoncteur électrique modulaire selon la revendication 20, dans lequel ledit siège de logement (46) de la deuxième extrémité du ressort (44) est au moins partiellement défini par ledit élément de butée (42).

22. Disjoncteur électrique modulaire selon l'une des revendications 1 à 4, dans lequel ladite au moins une borne de connexion électrique est une vis de serrage pré-agencée sur ledit moyen de support mobile.

23. Disjoncteur électrique modulaire selon l'une des revendications précédentes, dans lequel ladite au moins une borne de connexion électrique (35, 36) est reliée aux parties électriques fixes du disjoncteur par l'intermédiaire d'une tresse flexible électriquement conductrice respective (36g).

24. Disjoncteur électrique modulaire selon l'une des revendications 1 à 22, dans lequel ladite au moins une borne de connexion électrique (35, 36) est reliée aux parties électriques fixes du disjoncteur par des contacts électriques coulissants.

25. Procédé permettant de retirer un disjoncteur électrique modulaire (20) d'un rail de montage d'appareil électrique (22), le disjoncteur étant relié à au moins une barre omnibus à peigne (31, 32) et comprenant :
un corps principal (24) ;
au moins une borne de connexion électrique (35, 36) pour la connexion électromécanique du disjoncteur à ladite barre omnibus à peigne (31, 32) ;
un moyen de support mobile (37) de ladite au moins une borne de connexion électrique (35, 36) adapté pour permettre un mouvement relatif entre la borne de connexion électrique et le corps principal (24) du disjoncteur, ledit moyen de support mobile (37) pouvant coulisser entre des première et deuxième positions de butée opposées ; et
au moins une première (27, 28) et au moins une deuxième (33, 34) ouverture de couplage qui sont destinées toutes deux à être traversées par un contact sabre (29, 30) de ladite barre omnibus à peigne (31, 32), lesdites première et deuxième ouvertures de couplage étant prédisposées respectivement sur le corps principal (24) du disjoncteur (20) et sur le moyen de support mobile (37) ;
**caractérisé en ce que** ladite deuxième (33, 34) ouverture de couplage présente des dimensions plus petites que ladite première (27, 28) ouverture de couplage et ledit corps principal (24) est adapté à se déplacer par rapport audit moyen de support mobile (37), tandis que ce moyen de support est contraint avec ledit contact sabre (29, 30), jusqu'au moment où ledit moyen de support mobile, à partir de la deuxième position de butée, arrive à la première position de butée, et **en ce que** le procédé comprend les étapes qui consistent .
a) à libérer le disjoncteur du rail de montage d'appareil électrique ;
b) à déplacer le disjoncteur horizontalement et orthogonalement par rapport au rail de montage d'appareil électrique de manière à l'éloigner de celui-ci ;
c) à déplacer verticalement le disjoncteur de manière à permettre le découplage du disjoncteur de ladite au moins une barre omnibus à peigne.
